# FASCICULE DE BREVET EUROPEEN

(11) **EP 1 911 938 B1**
(45) Date de publication et mention de la délivrance du brevet: **05.05.2010**
(21) Numéro de dépôt: 07118424.6
(22) Date de dépôt: 12.10.2007
(51) Int. Cl.: F01D 25/18, F02C 7/32, F02C 7/36, F02K 3/06

(54) **Turboréacteur**
Turbomaschine
Turbofan

(30) Priorité: 13.10.2006 FR 0654280
(43) Date de publication de la demande: 16.04.2008
(73) Titulaire: SNECMA, 75015 Paris (FR)
(72) Inventeur: Charier, Gilles, Alain, 77130, La Grande Paroisse (FR); Morel, Patrick, Charles, Georges, 77590, Chartrettes (FR); Servant, Régis, Eugène, Henri, 91270, Vigneux sur Seine (FR)
(74) Mandataire: David, Daniel

(56) Documents cités:
- EP-A- 1 574 687
- EP-A1- 1 255 023
- FR-A- 2 882 096
- GB-A- 926 947
- US-A- 5 143 329

## Description

La présente invention concerne le domaine des turboréacteurs multicorps et multiflux, notamment des turboréacteurs à double corps et double flux. Elle vise le montage d'un équipement auxiliaire et la transmission mécanique entre celui-ci et un arbre du moteur.

Pour l'entraînement des machines auxiliaires montées sur le moteur, telles que les générateurs électriques, les pompes à huile ou a carburant, nécessaires à son fonctionnement ou à celui de l'aéronef sur lequel il est monté, on prélève généralement la puissance requise sur l'arbre principal. Un turboréacteur à double corps comprend deux arbres coaxiaux, l'un, dit basse pression ou BP, reliant le compresseur basse pression à la turbine basse pression et formant ensemble le corps BP, l'autre, dit haute pression ou HP, reliant le compresseur haute pression à la turbine haute pression et formant ensemble le corps HP. Dans le cas d'un tel moteur, la transmission de puissance vers les auxiliaires est généralement assurée par un arbre radial, logé dans un bras du carter intermédiaire, dont une extrémité comporte un pignon conique coopérant avec un pignon solidaire du corps haute pression. L'autre extrémité est reliée mécaniquement à un boîtier comprenant une pluralité d'engrenages et formant support des machines auxiliaires tout en assurant leur entraînement. Lorsque le moteur est à double flux, l'arbre de transmission radial traverse les deux veines de flux primaire et de flux secondaire respectivement car le boîtier à engrenages d'entraînement des accessoires, dit aussi AGB pour « accessory gear box », est monté sur le carter de la soufflante générant le flux secondaire.

En raison de l'évolution des moteurs et des conditions de leur utilisation, on a proposé de monter des équipements supplémentaires sur le carter du flux primaire en prise avec l'arbre radial d'entraînement des machines accessoires entre les deux extrémités de celui-ci. Un tel équipement peut, par exemple, être constitué d'un moteur permettant d'entraîner l'arbre de transmission radial, en appoint du corps HP. En effet, un tel appoint est utile dans le cas où l'agencement du moteur implique une demande importante de puissance au régime de ralenti de ce dernier, pour assurer l'entraînement de certaines machines auxiliaires telles que des générateurs électriques. Au régime de ralenti, le corps HP ne peut fournir de manière satisfaisante toute la puissance requise dans le cadre d'une telle conception.

La présente invention concerne donc le montage d'une machine ou équipement auxiliaire sur le carter du moteur, dans une position intermédiaire entre les deux extrémités de l'arbre de transmission radial ainsi que les aménagements relatifs à l'arbre de transmission radial.

Conformément à l'invention, un turboréacteur ayant les caractéristiques de la revendication 1 et comportant un carter intermédiaire avec un arbre d'entraînement d'un boîtier d'engrenages des machines auxiliaires monté dans un bras radial du carter intermédiaire, ledit arbre étant relié, à une première extrémité, à un moyen de transmission mécanique avec un arbre moteur du turboréacteur, à une deuxième extrémité, à un moyen de transmission mécanique avec ledit boîtier, et comprenant un pignon conique entre les deux extrémités permettant d'assurer une transmission mécanique avec un équipement auxiliaire supplémentaire, est caractérisé par le fait que l'arbre avec ledit pignon est contenu dans une enveloppe ménageant un circuit d'huile étanche par rapport audit bras.

La structure d'arbre d'entraînement selon l'invention présente l'avantage d'éviter les fuites d'huile et de limiter ainsi les zones feu. Cela est particulièrement avantageux dans le cas où la structure du carter intermédiaire comprend une virole externe rapportée, le nombre de pièces boulonnées augmentant généralement les risques de fuite d'huile.

Selon un mode de réalisation préféré, l'enveloppe comprend un carter pour le pignon et deux fourreaux pour les parties de l'arbre situées de part et d'autre du pignon.

L'invention s'applique en particulier au cas où l'arbre de transmission est en trois parties cylindriques s'emmanchant les uns dans les autres avec un premier élément cylindrique sur lequel le pignon est monté et deux éléments cylindriques d'arbre prolongeant de part et d'autre le premier élément cylindrique.

Conformément à une autre caractéristique de l'invention, l'équipement auxiliaire comprenant un axe d'entraînement coopère avec ledit pignon de l'arbre et est agencé de manière à former avec celui-ci un ensemble modulaire selon la revendication 8. Cette disposition est particulièrement avantageuse car elle simplifie le montage de l'équipement en usine ainsi que sa maintenance, et permet d'avoir un équipement interchangeable. Le montage et le réglage délicats du couple conique peuvent ainsi être effectués de façon précise en dehors du turboréacteur dont l'espace est réduit et généralement encombré. Au montage sur celui-ci, il reste seulement à emmancher les différents éléments cylindriques de l'arbre de transmission radial. Une telle opération ne requiert pas la mise en oeuvre d'outillage de précision.

L'équipement auxiliaire modulaire comprend un support sur lequel le pignon est monté.

On décrit maintenant un mode de réalisation non limitatif de l'invention, en référence aux dessins annexés sur lesquels :
la figure 1 montre, en coupe axiale, une vue générale d'un turboréacteur à double flux et double corps sur lequel l'invention est susceptible de s'appliquer,
la figure 2 montre, en coupe axiale, une vue à travers un bras radial du carter intermédiaire dans lequel est logé un arbre d'entraînement de la boîte AGB avec un équipement auxiliaire supplémentaire selon l'invention,
les figures 3 à 6 montrent une séquence de montage de l'arbre selon l'invention comportant un équipement auxiliaire supplémentaire.

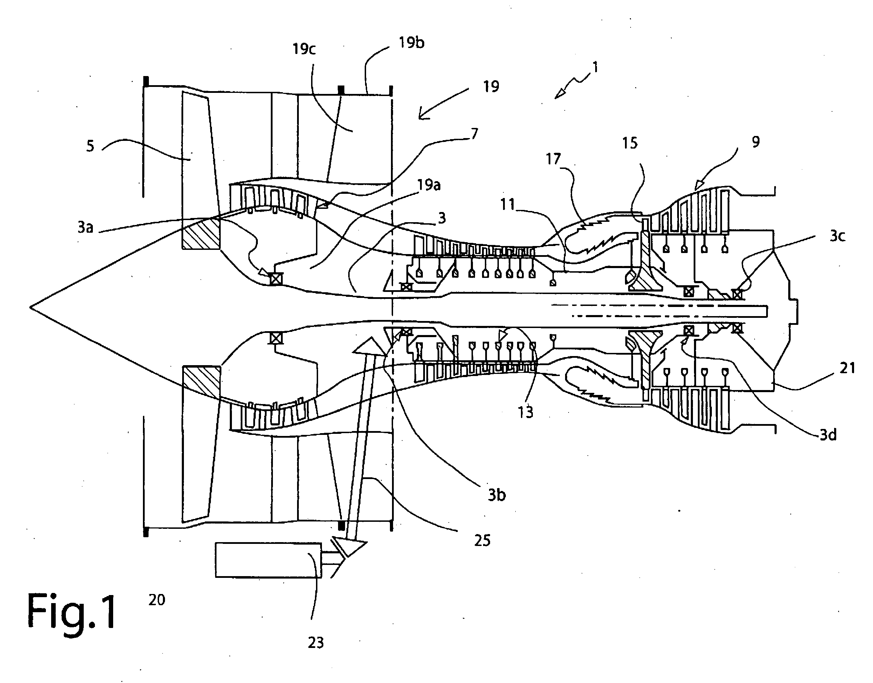

La figure 1 représente schématiquement un turboréacteur à double flux et double corps avec ses différents composants principaux. Il comprend un premier arbre 3 reliant, à gauche sur la figure, un rotor de soufflante 5 et les premiers étages 7 de compresseur à la turbine basse pression 9 ; l'ensemble forme le corps basse pression, BP. Coaxial au premier arbre, un deuxième arbre 11 en forme de tambour, relie les étages 13 haute pression du compresseur à la turbine 15 haute pression ; l'ensemble forme le corps haute pression HP avec la chambre de combustion 17. L'arbre 3 est supporté, en amont, par le palier 3a monté sur le carter 19 que l'on désigne carter intermédiaire et, en aval, par le palier 3c monté sur le carter d'échappement 21. L'arbre HP est supporté ici par le palier 3b du carter intermédiaire 19 et à l'arrière par l'arbre 3 par l'intermédiaire du palier interarbre 3d.

Le carter intermédiaire est composé d'un moyeu 19a supportant les paliers 3a et 3b, d'une virole 19b, extérieure, pourvue de moyens d'attache avant à l'aéronef et supportant le carter de soufflante, ainsi que de bras radiaux 19c reliant le moyeu 19a à la virole 19b. Ce carter intermédiaire est constitué au moins en partie d'une pièce venue de fonderie sur laquelle on a rapporté éventuellement des bras radiaux. Les machines auxiliaires, telles que générateurs et pompes à carburant ou à huile, sont montées sur un boîtier à engrenages 23, comme cela est connu, que l'on désigne dans le domaine par AGB. Ce boîtier est monté à l'extérieur sur le carter de soufflante à un emplacement qui en permet l'accès pour la maintenance. Les engrenages sont reliés mécaniquement à un arbre du moteur par l'intermédiaire d'un arbre d'entraînement radial 25 qui est logé dans un bras radial 19c du carter intermédiaire. Cet arbre d'entraînement est relié à un premier pignon conique à son extrémité radiale intérieure. Ce pignon est en prise avec un pignon conique solidaire du corps HP. L'arbre 25 est également relié à un deuxième pignon à son extrémité radiale extérieure qui est en prise avec un arbre d'entrée de l'ensemble d'engrenages de l'AGB.

En fonctionnement, un tel moteur aspire l'air par la soufflante qui le comprime en un flux primaire qui traverse les étages de compression, la chambre de combustion et les étages de turbine et un flux secondaire qui est éjecté dans l'atmosphère en bipassant la chambre de combustion. Les turbines entraînent les moyens de compression par l'intermédiaire des arbres BP et HP respectivement.

Il a été proposé de disposer un équipement auxiliaire supplémentaire dans l'espace ménagé dans le carter entre les deux flux, primaire et secondaire. Cet équipement, selon un exemple, est un moteur d'appoint qui participe à l'entraînement de l'arbre de transmission radial 25 quand le corps HP ne suffit pas. C'est le cas dans les moteurs où le nombre de machines auxiliaires entraînées et la puissance requise sont importants au ralenti. Un tel moteur d'appoint peut être une turbine à air, alimentée à partir du flux primaire.

Au-delà de cet exemple particulier, l'invention s'applique à tout équipement auxiliaire supplémentaire, machine réceptrice ou motrice, qui est logé dans cet espace.

Le problème que l'on rencontre dans ce cas vient en partie de la lubrification dont le besoin en débit d'huile dépasse largement les moyens existants pour l'arbre d'entraînement des machines auxiliaires. La présente invention vise un agencement qui permet de pallier ce problème.

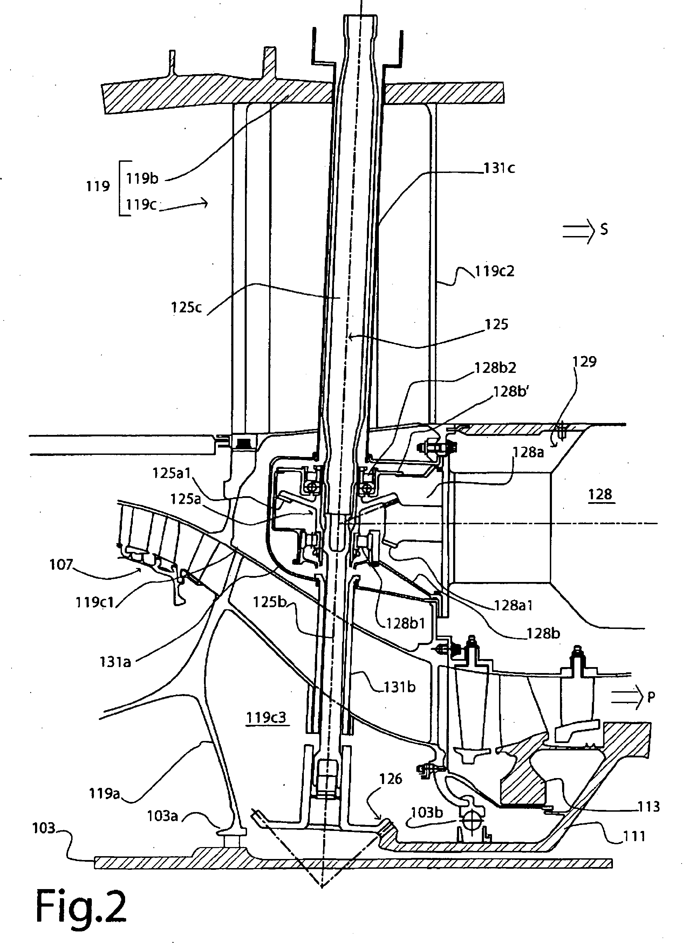

Sur la figure 2, on a représenté en coupe axiale une vue partielle du moteur au niveau de l'arbre de transmission radial, conforme à l'invention.

Les pièces correspondant à celles de la figure 1 portent la même référence augmentée de 100. Ainsi on trouve le carter intermédiaire 119 dans un bras radial 119c duquel est logé l'arbre radial 125 d'entraînement des machines auxiliaires non visibles sur la figure 2. L'arbre 125 traverse la virole 119b du carter intermédiaire et son extrémité radiale extérieure est reliée mécaniquement, par une liaison à cannelures par exemple, à un couple de pignons coniques que l'on n'a pas représenté.

Le bras 119c est creux et est formé de trois parties radialement distinctes : 119c1, 119c2 et 119c3.

La partie 119c3 profilée aérodynamiquement, traverse la veine du flux primaire P dont on voit d'un côté une partie du compresseur BP 107 et du compresseur HP 113 de l'autre. La partie 119c3 du bras 119c est adjacente au moyeu 119a du carter intermédiaire.

Le bras radial 119c comprend un partie 119c2 traversant la veine de flux secondaire S. La partie 119c2 est adjacente à la virole 119b.

Le bras comprend une partie 119c1 entre les deux premières. Cette partie délimite un secteur d'espace annulaire qui prolonge d'un côté le bec de séparation entre les flux primaire et secondaire, et de l'autre côté se prolonge lui-même par un espace annulaire 129 entre les deux flux.

Dans le moyeu 119a, le palier 103a supporte l'arbre 103 du corps BP et le palier 103b supporte un tourillon 111 formant l'extrémité amont du compresseur 113 du corps HP.

L'arbre 125 est logé dans ce bras radial du carter intermédiaire. Le bras 125 est en trois éléments : 125a, 125b et 125c. Le premier élément 125a central est de forme cylindrique, creuse et est solidaire d'un pignon conique 125a1. Le deuxième élément 125b est emmanché, du côté radialement intérieur, sur le premier élément 125a et y est maintenu par une liaison à cannelures. A son extrémité intérieure, il est relié par une liaison à cannelures à un couple de pignons coniques 126 en prise avec le tourillon 111 du corps HP. De cette façon l'élément 125b est entraîné par le corps HP.

Le troisième élément 125c est emmanché, du côté radialement extérieur, sur le premier élément 125a et est maintenu par une liaison à cannelures. Comme on l'a vu l'extrémité radiale de cet élément n'est pas visible sur la figure. Elle est reliée mécaniquement par un couple de pignons coniques à l'arbre d'entrée du boîtier AGB. Le mouvement de rotation du corps HP est ainsi transmis par le moyen de transmission constitué par le couple de pignons coniques 126, et l'arbre 125 à l'arbre d'entrée du boîtier AGB.

Un équipement auxiliaire supplémentaire 128 est logé dans l'espace ménagé par le carter moteur entre la veine du flux primaire et la veine du flux secondaire. L'équipement comprend un axe 128a de transmission de mouvement terminé par un pignon conique 128a1. L'équipement 128 est boulonné sur le flanc de la partie 119c1 du bras radial 119c qui prolonge l'espace annulaire précédent.

Cet équipement peut être quelconque ; il peut s'agir d'un moteur, turbine à air, moteur hydraulique, pour entraîner en appoint quand cela est nécessaire l'arbre de transmission 125. Il peut s'agir aussi d'une machine réceptrice supplémentaire entraînée par l'arbre 125.

Un carter support 128b est solidaire du carter de l'équipement 128. Ce carter 128b supporte l'élément central 125a de l'arbre de transmission 125 par l'intermédiaire de deux paliers 128b1 et 128b2 de telle façon que le pignon conique 128a1 engrène avec le pignon conique 125al de l'élément 125a pour une transmission de mouvement de rotation de l'un à l'autre. Pour faciliter l'assemblage, le carter support 128b comprend un couvercle 128b', sur lequel le palier 128b2 est monté.

L'équipement 128 avec l'axe 128a, le carter support 128b et l'élément 125a de l'arbre 125 forment ensemble un module 130 en ce sens que cet ensemble peut être assemblé séparément et monté sur le turboréacteur d'un bloc comme cela sera expliqué plus loin.

Le module 130 associé à l'arbre 125 est isolé de l'espace intérieure du bras 119C grâce à une enveloppe 131.

Cette enveloppe est constituée d'un carter 131a et de deux fourreaux 131b et 131c. Le carter 131a entoure le carter support 128B de l'équipement 128 et l'élément 125A que celui-ci supporte. Il comporte trois ouvertures l'une pour le passage de l'équipement 128 et deux pour les éléments d'arbre 125b et 125c respectivement.

Le fourreau 131b entoure l'élément 125b de l'arbre 125 et le fourreau 131c entoure l'élément 125c. Des joints appropriés assurent l'étanchéité entre le carter 131a et les deux fourreaux 131b et 131c. De même des joints sont prévus aux deux autres extrémités des deux fourreaux.

Le carter 128b est boulonné sur la paroi du bras 119c.

Grâce à cette enveloppe on peut amener l'huile nécessaire à la lubrification de l'équipement et des éléments de transmission mécanique par un circuit qui n'interfère pas avec les bras radiaux du carter intermédiaire. Par exemple l'huile qui a servi à lubrifier le couple de pignons coniques 128a1 et 125a1 est récupérée dans l'espace ménagé entre les éléments d'arbre 125b et 125c et les fourreaux 131b et 131c respectivement pour être recyclé.

Pour une récupération plus efficace, un dispositif spécialement dédié pourra être installé au point bas du carter 131a, afin de renvoyer directement vers le circuit de récupération du moteur, la majeure partie de l'huile qui a servi à lubrifier le couple conique et ses roulements. Un tel dispositif éviterait de renvoyer vers l'AGB ce flux d'huile, qui peut être pollué par des débris provenant des composants mécaniques du module.

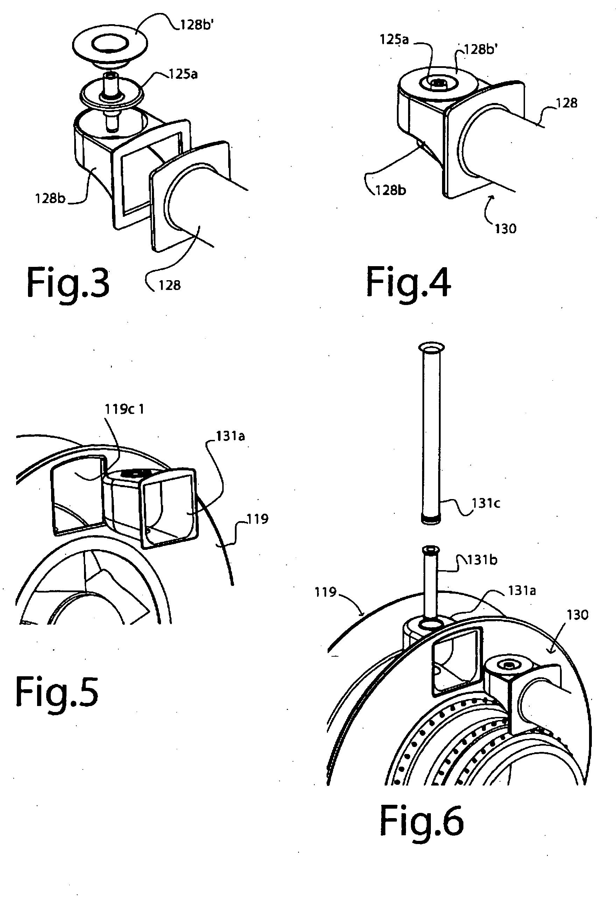

On décrit le montage de l'ensemble en relation avec les figures 3 à 6.

Sur la figure 3 on a représenté l'assemblage du module 130. Le carter support 128b est fixé sur l'équipement 128 dont on ne voit pas ici l'axe 128a. Ensuite on introduit l'élément 125a de l'arbre de transmission 125, et on ferme le carter avec le couvercle 128b'. Les paliers entre l'élément 125a et le carter support 128b n'ont pas été représentés.

Sur la figure 4 le module 130 est assemblé. On comprend que cette opération peut être effectuée dans un atelier distinct de l'atelier de montage du moteur ou chez un fournisseur. Le module peut être fourni assemblé, ce qui est un avantage certain car les opérations délicates d'ajustement du couple de pignons coniques doivent être effectuées par un personnel et des moyens spécialisés.

La figure 5 montre la mise en place du carter 131a de l'enveloppe 131 à l'intérieur du carter intermédiaire 119 dans le logement 119c1. Les bras radiaux 119c n'ont pas été représentés. L'étape suivante consiste à introduire depuis l'extérieur le fourreau 131b équipé de ses joints à travers les ouvertures radiales du carter 131a, puis le fourreau 131c équipé de ses joints.

Sur la figure 6 on introduit le module 130 dans le carter 131a à travers l'ouverture axiale du carter intermédiaire 119, après mise en place du fourreau 131b. Le module 130 en place empêche le fourreau 131b de sortir de son logement. On boulonne ensuite le module 130 sur une paroi radiale du carter 119, puis on termine le montage de cet ensemble en mettant en place les deux éléments d'arbre 125b puis 125c.

## Revendications

1. Turboréacteur à double flux comprenant un carter intermédiaire (119) et un arbre (125) d'entraînement de boîtier à engrenages des machines auxiliaires monté dans un bras radial (119c) du carter intermédiaire (119), ledit arbre étant relié à une première extrémité à un moyen de transmission mécanique (126) à un arbre moteur du turboréacteur, à une deuxième extrémité à un moyen de transmission mécanique avec ledit boîtier et comprenant un pignon conique (125a1) entre les deux extrémités permettant d'assurer une transmission mécanique avec un équipement auxiliaire supplémentaire (128), **caractérisé par le fait que** l'arbre est contenu, ensemble avec ledit pignon (125a1), dans une enveloppe (131) ménageant un circuit d'huile étanche par rapport audit bras (119c).

2. Turboréacteur selon la revendication 1 dont l'enveloppe (131) comprend un carter (131a) pour le pignon (125a1) et deux fourreaux (131b, 131C) pour les parties (125b, 125c) de l'arbre (125) situées de part et d'autre du pignon (125a1).

3. Turboréacteur selon l'une des revendications 1 et 2 comprenant un élément cylindrique (125a) solidaire du pignon (125a1) et deux éléments d'arbre (125b, 125c), prolongeant, de part et d'autre, l'élément cylindrique (125a).

4. Turboréacteur selon la revendication 3 dont l'équipement auxiliaire (128) comprend un axe d'entraînement (128a) coopérant avec le pignon (125a1) de l'arbre de transmission (125) selon la revendication 3 et formant avec ledit pignon (125a1) un ensemble modulaire (130).

5. Turboréacteur selon la revendication précédente dont l'équipement auxiliaire comprend un support (128b) sur lequel le pignon (125a1) est monté par l'intermédiaire de paliers (128b1, 128b2).

6. Turboréacteur à double flux et carter intermédiaire (119) selon l'une des revendications 4 et 5, dont ledit pignon (125a1) est logé dans un espace du bras radial (119c) formant séparation du flux primaire d'avec le flux secondaire.

7. Turboréacteur selon la revendication précédente dont l'enveloppe (131) comprend un carter (131a) pour le pignon (125a1), logé dans ledit espace du bras radial et deux fourreaux (131b, 131c) pour les éléments (125b, 125c) de l'arbre (125) situés de part et d'autre du pignon (125a1).

8. Ensemble modulaire pour turboréacteur à double flux comprenait un équipement auxiliaire (128) dans une enveloppe étanche agencé pour être monté sur un arbre (125) d'entraînement de boîtier à engrenages du turboréacteur, ledit arbre (125) comprenant deux éléments d'arbre (125b, 125c) et ledit équipement auxiliaire comprenant un axe d'entraînement (128a), le dit ensemble modulaire comprenant un pignon conique (125a1) avec lequel ledit axe d'entraînement (128a) coopère, le dit pignon conique (125a1) comprenant un élément cylindrique (125a) solidaire du pignon (125a1) et dans lequel lesdits deux éléments d'arbre (125b, 125c) sont destinés à être emmanchés en prolongeant de part et d'autre l'élément cylindrique (125a) et un support (128b) sur lequel ledit pignon conique (125a1) est monté par l'intermédiaire de paliers (128b1, 128b2).

## Claims

1. Turbofan engine comprising an intermediate casing (119) and a shaft (125) driving a gearbox for auxiliary machines mounted in a radial arm (119c) of the intermediate casing (119), said shaft being connected at a first end to a means of mechanical transmission (126) to a drive shaft of the turbofan, at a second end to a means of mechanical transmission with said box and comprising a conical pinion (125a1) between the two ends providing a mechanical transmission with supplementary auxiliary equipment (128), **characterised by** the fact that the shaft is contained, together with said pinion (125a1), in an envelope (131) providing an oil circuit sealed with respect to said arm (119c).

2. Turbofan according to claim 1, the envelope (131) of which comprises a casing (131 a) for the pinion (125a1) and two sheaths (131 b, 131 c) for the parts (125b, 125c) of the shaft (125) situated on each side of the pinion (125a1).

3. Turbofan according to one of claims 1 and 2, comprising a cylindrical element (125a) secured to the pinion (125a1) and two shaft elements (125b, 125c), extending the cylindrical element (125a) on each side.

4. Turbofan according to claim 3, the auxiliary equipment (128) of which comprises a drive shaft (128a) engaging with the pinion (125a1) of the transmission shaft (125) according to claim 3 and forming with said pinion (125a1) a modular assembly (130).

5. Turbofan according to the preceding claim, the auxiliary equipment of which comprises a support (128b) on which the pinion (125a1) is mounted by means of bearing housings (128b1, 128b2).

6. Turbofan with intermediate casing (119) according to one of claims 4 and 5, said pinion (125a1) of which is housed in a space in the radial arm (119c) forming a separation of the primary flow from the secondary flow.

7. Turbofan according to the preceding claim, the envelope (131) of which comprises a casing (131a) for the pinion (125a1), housed in said space in the radial arm and two sheaths (131 b, 131 c) for the elements (125b, 125c) of the shaft (125) situated on each side of the pinion (125a1).

8. Modular assembly for a turbofan comprising auxiliary equipment (128) in a sealed enclosure arranged so as to be mounted on a shaft (125) driving the gearbox of the turbofan, said shaft (125) comprising two shaft elements (125b, 125c) and said auxiliary equipment comprising a drive shaft (128a), said modular assembly comprising a conical pinion (125a1) with which said drive shaft (128a) engages, said conical pinion (125a1) comprising a cylindrical element (125a) secured to the pinion (125a1) and in which said two shaft elements (125b, 125c) are intended to be fitted while extending on each side of the cylindrical element (125a) and a support (128b) on which said conical pinion (125a1) is mounted by means of bearing housings (128b1, 128b2).

## Patentansprüche

1. Zweistrom-Strahltriebwerk, umfassend ein Zwischengehäuse (119) und eine Antriebswelle (125) eines Zahnradschutzkastens der Hilfsmaschinen, der in einem radialen Arm (119c) des Zwischengehäuses (119) angebracht ist, wobei die Welle an einem ersten Ende mit einem mechanischen Übertragungsmittel (126) mit einer Hauptantriebswelle des Strahltriebwerks, an einem zweiten Ende mit einem mechanischen Übertragungsmittel mit dem Gehäuse verbunden ist und zwischen den beiden Enden ein Kegelrad (125a1) umfasst, das es ermöglicht mit einer zusätzlichen Hilfseinrichtung (128) eine mechanische Übertragung sicherzustellen, **dadurch gekennzeichnet, dass** die Welle zusammen mit dem Zahnrad (125a1) in einer Umhüllung (131) enthalten ist, die einen gegenüber dem Arm (119c) abgedichteten Ölkreislauf schafft.

2. Strahltriebwerk nach Anspruch 1, wobei die Umhüllung (131) ein Gehäuse (131 a) für das Zahnrad (125a1) und zwei Hülsen (131 b, 131 c) für die Teile (125b, 125c) der Welle (125), die sich auf beiden Seiten des Zahnrads (125a1) befinden, umfasst.

3. Strahltriebwerk nach einem der Ansprüche 1 und 2, umfassend ein zylindrisches Element (125a), das mit dem Zahnrad (125a1) und zwei Wellenelementen (125b, 125c), die das zylindrische Element (125a) auf beiden Seiten verlängern, fest verbunden ist.

4. Strahltriebwerk nach Anspruch 3, dessen Hilfseinrichtung (128) eine Antriebsachse (128a) umfasst, die mit dem Zahnrad (125a1) der Antriebswelle (125) nach Anspruch 3 zusammenwirt und mit dem Zahnrad (125a1) eine Moduleinheit (130) bildet.

5. Strahltriebwerk nach dem vorhergehenden Anspruch, dessen Hilfseinrichtung eine Halterung (128b) umfasst, auf der das Zahnrad (125a1) mittels Lagern (128b1, 128b2) angebracht ist.

6. Zweistrom-Strahltriebwerk mit Zwischengehäuse (119) nach einem der Ansprüche 4 und 5, dessen Zahnrad (125a1) in einem Raum des radialen Arms (119c) untergebracht ist, der eine Trennung des Hauptstroms von dem Nebenstrom bildet.

7. Strahltriebwerk nach dem vorhergehenden Anspruch, dessen Umhüllung (131) ein Gehäuse (131 a) für das Zahnrad (125a1), das in dem Raum des radialen Arms untergebracht ist, und zwei Hülsen (131b, 131c) für die Elemente (125b, 125c) der Welle (125), die sich auf beiden Seiten des Zahnrads (125a1) befinden, umfasst.

8. Moduleinheit für Zweistrom-Strahltriebwerk, umfassend eine Hilfseinrichtung (128) in einer abgedichteten Umhüllung, die angeordnet ist, um auf einer Antriebswelle (125) des Zahnradschutzkastens des Strahltriebwerks angebracht zu werden, wobei die Welle (125) zwei Wellenelemente (125b, 125c) umfasst und die Hilfseinrichtung eine Antriebsachse (128a) umfasst, wobei die Moduleinheit ein Kegelrad (125a1) umfasst, mit dem die Antriebsachse (128a) zusammenwirkt, wobei das Kegelrad (125a1) ein zylindrisches Element (125a) umfasst, das mit dem Zahnrad (125a1) fest verbunden ist, und wobei die beiden Wellenelemente (125b, 125c) dazu gedacht sind, eingesteckt zu werden, indem sie das zylindrische Element (125a) und eine Halterung (128b), auf der das Kegelrad (125a1) mittels Lagern (128b1, 128b2) angebracht ist, verlängern.
